Europäisches Patentamt

(19) European Patent Office    (11) Veröffentlichungsnummer: **0 141 127**
**B1**
Office européen des brevets

(12)    **EUROPÄISCHE PATENTSCHRIFT**

(45) Veröffentlichungstag der Patentschrift:    (51) Int. Cl.⁴: **H 04 N 7/13**
19.11.87

(21) Anmeldenummer: **84110236.1**

(22) Anmeldetag: **28.08.84**

(54) Anordnung zur zweidimensionalen DPCM-Codierung.

(30) Priorität: **31.08.83 DE 3331426**    (73) Patentinhaber: **Siemens Aktiengesellschaft Berlin und München, Wittelsbacherplatz 2, D-8000 München 2 (DE)**

(43) Veröffentlichungstag der Anmeldung:
**15.05.85 Patentblatt 85/20**    (72) Erfinder: **Starck, Alexander, Dipl.-Phys., Terhaltestrasse 45, D-8000 München 90 (DE)**

(45) Bekanntmachung des Hinweises auf die Patenterteilung:
**19.11.87 Patentblatt 87/47**

(84) Benannte Vertragsstaaten:
**AT CH DE FR IT LI**

(56) Entgegenhaltungen:    (56) Entgegenhaltungen: (Fortsetzung)
US - A - 3 769 451    RUNDFUNKTECHNISCHE MITTEILUNGEN, Band 20,
US - A - 4 292 651    Nr. 6, 1976, Seiten 236-241, Hamburg, DE; J. HEITMANN:
US - A - 4 386 366    "Ein Systemkompatibles digitales Fernsehsignal"
    INTERNATIONALE ELEKTRONISCHE RUNDSCHAU, Nr.
SMPTE JOURNAL, Band 89, Nr. 4, April 1980, Seiten    1, Januar 1973, Seiten 12-18, Berlin, DE; B. WENDLAND
244-248, New York, US; R. BURKHARDT et al.: "Digital    et al.: "Ein adaptiver Intraframecodierer für
television transmission with 34Mbit/s"    Fernsehsignale"
ELECTRICAL COMMUNICATION, Band 51, Nr. 2, 1976,
Seiten 100-106, New York, US; H.J. KLUTZ et al.: "Test
system for digital TV transmission"
PROCEEDINGS OF THE 1974 INTERNATIONAL ZÜRICH
SEMINAR ON DIGITAL COMMUNICATIONS, 12.-15.
März 1974, Zürich, CH, Auslager IEEE, Seiten
C1(1)-C1(7), New York, US; H.G. MUSMANN: "A
comparison of extended differential coding schemes for
video signals"

**Beschreibung**

Die Erfindung betrifft eine Anordnung zur zweidimensionalen DPCM-Codierung mit einem umschaltbaren Quantisierer und mit einer Quantisierersteuerung, der jeweils der zuletzt errechnete Bildpunktsignalwert und die benachbarten Bildpunktsignalwerte der vorangegangenen Fernsehzeile zugeführt sind.

Bei der Übertragung von Farbfernsehsignalen ist es üblich, das Farbsignal in ein Luminanz- und zwei Chrominanz- bzw. Farbdifferenzsignale zu zerlegen. Zur Datenreduktion wird bei der Übertragung der einzelnen Komponenten häufig die Differenzpulscodemodulation (DPCM) verwendet. Nach anfänglichen Versuchen mit einer eindimensionalen DPCM-Codierung wurde die Berechnung des für die Ermittlung der DPCM-Signale benötigten Schätzwertes durch eine vertikale Prädiktion erweitert. Gegenüber der eindimensionalen DPCM brachte diese zweidimensionale DPCM sowohl durch entsprechende Codierung der Luminanz und der Chrominanz eine deutliche Qualitätsverbesserung der übertragenen Fernsehbilder.

In der Dissertation «Optimierung von Farbfernseh-DPCM-Systemen unter Berücksichtigung der Wahrnehmbarkeit von Quantisierungsfehlern» von Peter Pirsch an der Technischen Universität Hannover, 1979, wurde eine von der Aktivität, das heisst, vom Kontrast zwischen entsprechenden Bildpunkten aufeinanderfolgender Fernsehbilder abhängige Steuerung der Quantisierung untersucht. Die Einführung dieser gesteuerten Quantisierung bei der zweidimensionalen DPCM brachte im Luminanzzweig bei den Bildern meist eine zusätzliche Verbesserung. Die gesteuerte Quantisierung kann natürlich, sofern Aufwandsgründe nicht dagegen sprechen, ebenfalls bei den Chrominanzsignalen eingesetzt werden. Die Auswirkungen der gesteuerten DPCM wurden in einer Datenverarbeitungsanlage simuliert. Hinweise auf eine technisch mögliche Realisation fehlen jedoch.

In der Zeitschrift «SMPTE-Journal» April 1980, Volume 89, Seite 244 bis 248 ist ebenfalls ein DPCM-Verfahren mit umschaltbarer Quantisierungscharakteristik beschrieben, bei dem die Steuerung des Quantisierers allein von der Differenz eines Bildpunktsignalwertes (D) der vorangegangenen Zeile und des vor dem aktuellen Bildsignalwert (s) liegenden Bildsignalwertes (A) ermittelt wird. Hierdurch kann natürlich keine optimale Steuerung des Quantisierers erreicht werden. Hinweise auf eine technische Realisiation fehlen ebenfalls.

Daher ist es die Aufgabe der Erfindung, eine einfach zu realisierende Anordnung zur DPCM-Codierung/Decodierung mit steuerbarem Quantisierer anzugeben.

Diese Aufgabe wird erfindungsgemäss dadurch gelöst, dass mehrere in Reihe geschaltete Register vorgesehen sind, die die dem verarbeitenden Bildpunktsignal benachbarten Bildpunktsignalwerte der vorangegangenen Fernsehzeile speichern, dass die Quantisierersteuerung eine Vergleichseinrichtung enthält, die einen Amplitudenvergleich zwischen den Bildpunktsignalwerten der vorangegangenen Fernsehzeile durchführt, dass eine Auswahlsteuerung an die Ausgänge der Vergleichseinrichtung angeschlossen ist, dass eine Extremwertsteuerung vorgesehen ist, die von den Bildpunktsignalwerten zwei Extremwerte über eine Multiplexeinrichtung an eine Subtraktionseinrichtung durchschaltet, der ebenfalls der zuletzt errechnete Bildpunktsignalwert zugeführt ist und in der die Differenzen zwischen dem zuletzt errechneten Bildpunktsignalwert und den Extremwerten sowie zwischen den Extremwerten gebildet werden, dass eine Differenzauswahlsteuerung vorgesehen ist, der die Vorzeichenbits der Differenzen zugeführt werden, und dass ein Multiplexer an die Ausgänge der Substraktionseinrichtung angeschlossen ist, über den die Differenzauswahlsteuerung die betragsmässig grösste Differenz an eine Schwellwertlogik durchschaltet, die den Quantisierer steuert.

Im Codierer muss der Schätzwert $\hat{x}$ ermittelt werden. Damit der Decodierer dieselbe Berechnung durchführen kann wie der Codierer, darf dieser Schätzwert nicht aus den ursprünglichen Bildpunktsignalen ermittelt werden, sondern nur aus den bereits im Codierer errechneten Bildpunktsignalwerten vom sogenannten lokalen Ausgang. Zunächst werden im Codierer aus den Bildpunktsignalwerten der vorangegangenen Zeile der grösste und der kleinste Bildpunktsignalwert, die Extremwerte, ermittelt. Hierzu sind nur einfache Komparatoren und ein Multiplexer notwendig. Zeitkritisch ist stets der Rechenvorgang mit dem letzten Bildpunktsignalwert A. Durch Register (digitale Speicher) wird dafür gesorgt, dass die Extremwerte gleichzeitig mit dem zuletzt errechneten Bildpunktsignalwert zur Weiterverarbeitung vorliegen. Nach einer Subtraktion, die beispielsweise durch Addition der Zweierkomplemente durchgeführt wird, muss die grösste Differenz der Bildpunktsignalwerte an eine Schwellwertlogik durchgeschaltet werden, über die der Quantisierer gesteuert wird. Dies wird durch eine Differenzauswahlsteuerung erreicht, der nur jeweils die Vorzeichenbits der gebildeten Differenzen zugeführt werden. Die Differenzauswahlsteuerung und ebenso die Extremwertsteuerung sind extrem einfach aufgebaut und bestehen nur aus zwei einfachen Gatterschaltungen.

Es ist vorteilhaft, dass die Invertierungsschaltung zwischen dem Ausgang des Multiplexers und der Schwellwertlogik eingeschaltet ist, die bei einem negativen Vorzeichen der grössten Differenz durch Bildung des Zweierkomplements den Betrag der maximalen Differenz an die Schwellwertlogik abgibt.

Durch die Bildung des Betrages der maximalen Differenz wird die Schwellwertlogik einfacher, da das Vorzeichen nicht berücksichtigt werden muss.

Es ist zweckmässig, dass drei Bildpunktsignalwerte der vorangegangenen Fernsehzeile zur Berechnung eines vertikalen Vorhersagewertes vorgesehen sind, dass drei Vergleicher mit je zwei Eingängen vorgesehen sind und dass als Multiplexeinrichtung zwei elektronische Umschalter vorgesehen sind.

Mit der Verwendung von drei Bildpunktsignalwerten der vorausgegangenen Fernsehzeile zur Berechnung des vertikalen Vorhersagesignals ergibt sich bereits eine erhebliche Verbesserung der Bildqualität. Die Verwendung von mehr als drei vorangegangenen Bildsignalwerten bewirkt nur eine unwesentliche Verbesserung; in Sonderfällen sogar eine geringfügige Verschlechterung des Vorhersagewertes.

Weitere vorteilhafte Ausbildungen der Erfindung sind in den übrigen Unteransprüchen angegeben.

Die Erfindung wird anhand eines Ausführungsbeispiels näher erläutert.

Es zeigen

Fig. 1 ein Prinzipschaltbild für einen zweidimensionalen DPCM-Codierer,

Fig. 2 das Prinzipschaltbild eines Vertikalcodierers,

Fig. 3 die Quantisierersteuerung,

Fig. 4 eine Tabelle zur Ermittlung des grössten und des kleinsten Bildsignalwertes,

Fig. 5 eine Extremwertsteuerung,

Fig. 6 eine Tabelle zur Ermittlung der grössten Differenz zwischen drei Bildsignalwerten,

Fig. 7 die Schaltung einer Differenzauswahlsteuerung und

Fig. 8 einen Ausschnitt aus einem Fernsehbild.

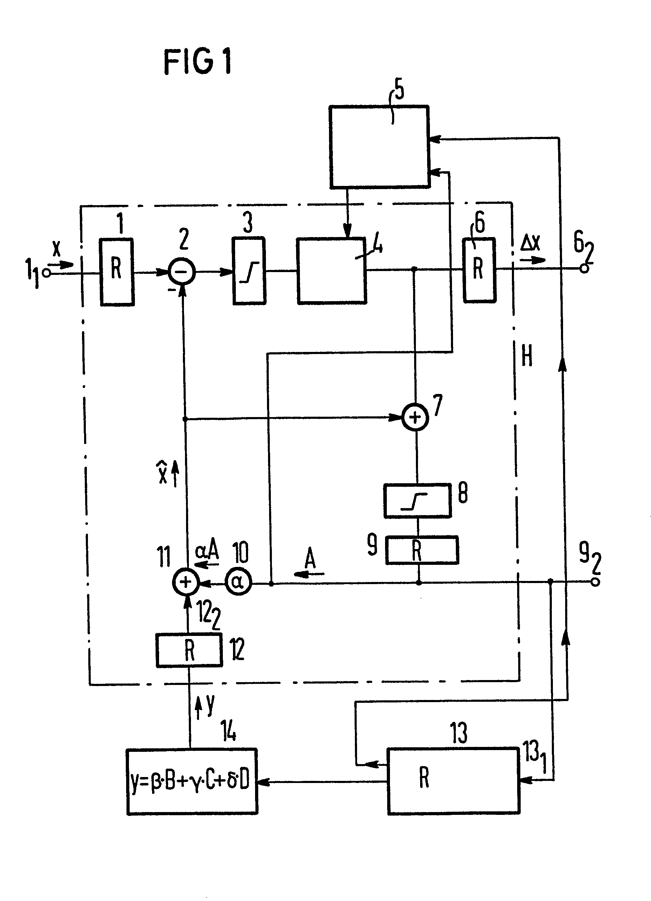

Der in Fig. 1 dargestellte DPCM-Codierer enthält einen Horizontalcodierer H und einen Vertikalcodierer 14. An den Eingang $1_1$ des DPCM-Codierers ist ein erstes Register 1 angeschaltet, dessen Ausgang mit einem Subtrahierer 2 verbunden ist. Der Ausgang des Subtrahierers ist mit dem Eingang einer Begrenzerlogik 3 verbunden, deren Ausgang an den Eingang eines steuerbaren Quantisierers 4 angeschlossen ist. Ein zweites Register 6 ist an den Ausgang des Quantisierers 4 angeschlossen und gibt die quantisierten DPCM-Werte $\Delta$ x an seinen Ausgang $6_2$ ab. An den Ausgang des Quantisierers 4 ist ausserdem ein Addierer 7 angeschlossen. Die Codiererschleife wird von der Reihenschaltung des Addierers 7, einer zweiten Begrenzerlogik 8, eines Registers 9, eines Multiplizierers 10, eines Addierers 11 über den Subtrahierer 2 geschlossen. Der Ausgang $9_2$ des Registers, auch als lokaler Ausgang bezeichnet, ist über weitere Register 13, durch die die Bildsignalwerte um ca. eine Fernsehzeile verzögert werden, mit dem Eingang eines Vertikalcodierers 14 verbunden, dessen Ausgang über ein Register 12 mit dem zweiten Eingang des Addierers 11 verbunden ist. Der Ausgang dieses Addierers 11 ist wieder mit dem zweiten Eingang des ersten Addierers 7 verbunden. Die Steuereingänge des Quantisierers 4 sind mit dem Ausgang einer Quantisierersteuerung 5 verbunden, deren Eingänge mit dem Ausgang des Registers 9 und mit Ausgängen der weiteren Register 13 verbunden sind.

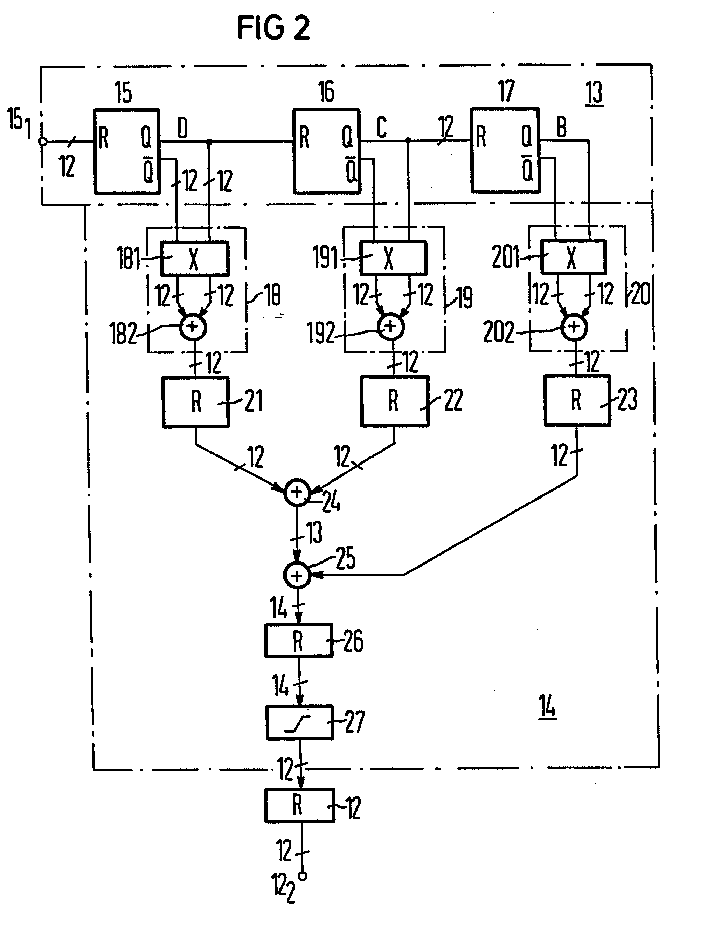

In Fig. 2 sind drei der weiteren Register 13 und der Vertikalcodierer 14 detailliert dargestellt. Die weiteren Register 13 bestehen aus einem Schieberegister und den drei in Reihe geschalteten Einzelregistern 15, 16 und 17. Die Ausgänge Q und invertierten Ausgänge $\overline{Q}$ des Registers 15 sind über einen Multiplizierer 18 und ein Register 21 an den ersten Eingang eines Addierers 24 angeschlossen. Die Ausgänge Q, $\overline{Q}$ des Registers 16 sind über einen Multiplizierer 19 und ein Register 22 an den zweiten Eingang des Addierers 24 angeschlossen. Die Ausgänge Q, $\overline{Q}$ des Registers 17 sind über einen Multiplizierer 20 und ein Register 23 an den zweiten Eingang eines Addierers 25 angeschlossen, dessen erster Eingang mit dem Ausgang des Addierers 25 verbunden ist. Die Multiplizierer 18, 19 und 20 enthalten jeweils eine Multiplizierschaltung 181, 191, 201 und einen Addierer 182, 192 und 202.

Der Ausgang des Addierers 25 ist über ein Register 26 und eine Begrenzerlogik 27 über das Register 12 mit dem Ausgang $12_2$ an den Eingang des zweiten Addierers 11 angeschaltet. Alle Register dienen als digitale Speicher oder Laufzeitglieder.

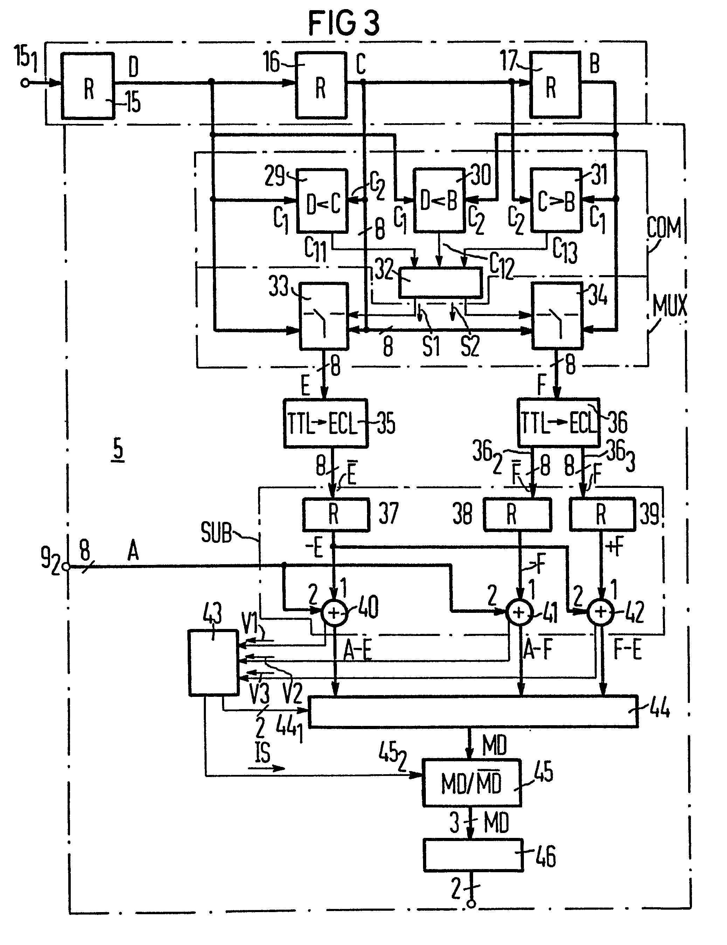

In Fig. 3 ist der Kern der Erfindung, die Quantisierersteuerung 5, dargestellt. Zum besseren Verständnis wurden die in Reihe geschalteten Einzelregister 15, 16 und 17 ebenfalls nochmals dargestellt. Die Ausgänge der Register 15 bis 17 sind mit Eingängen von drei Vergleichern 29, 30 und 31 verbunden. So ist der Ausgang des Registers 15 mit dem ersten Eingang $C_1$ des ersten Vergleichers 29 und dem ersten Eingang $C_1$ des zweiten Vergleichers 30 verbunden.

Der Ausgang des Registers 16 ist jeweils mit dem zweiten Eingang $C_2$ des ersten Vergleichers 29 und des dritten Vergleichers 31 verbunden, während der Ausgang des Registers 17 mit dem ersten Eingang $C_1$ des dritten Vergleichers 31 und dem zweiten Eingang $C_2$ des zweiten Vergleichers 30 verbunden ist. Die Ausgange $C_{11}$, $C_{12}$ und $C_{13}$ der Vergleicher 29 bis 31 sind mit den Eingängen einer Extremwertsteuerung 32 verbunden, deren Ausgänge mit den Steuereingängen eines ersten Multiplexers MUX mit zwei Umschaltern 33 und 34 verbunden sind. Die Eingänge $C_1$, $C_2$ des ersten Umschalters 33 sind jeweils mit dem Ausgang des Registers 15 und dem Ausgang des Registers 16 verbunden, die Eingänge $C_1$, $C_2$ des zweiten Umschalters 34 sind jeweils mit dem Ausgang des Registers 16 und des Registers 17 verbunden. Der Ausgang des ersten Umschalters 33 ist über eine Umsetzerschaltung 35 mit einem Register 37 verbunden; der Ausgang des zweiten Umschalters 34 ist mit einer Umsetzerschaltung 36 verbunden, an deren Ausgang $36_2$ das Eingangssignal invertiert und an deren Ausgang $36_3$ das Eingangssignal nichtinvertiert abgegeben wird.

Die Ausgänge der zweiten Umsetzerschaltung 36 sind mit den Registern 38 bzw. 39 verbunden.

Die Ausgänge der Register 37, 38 und 39 sind jeweils mit dem ersten Eingang eines Addierers 40, 41 bzw. 42 verbunden. Die zweiten Eingänge der Addierer 40 und 41 sind an den Ausgang $9_2$ des Registers 9 angeschlossen; der zweite Eingang des Addierers 42 ist mit dem Ausgang des Registers 37 verbunden. Die Datenausgänge der Addierer 40 bis 42 sind mit einem Multiplexer 44 verbunden, dessen Steuereingang $44_1$ mit einer Differenzauswahlsteuerung 43 verbunden ist. Dieser werden auch die Vorzeichenbits der Addierer 40 bis 42 zugeführt. Der Ausgang des Multiplexers 44 ist mit dem Eingang einer Invertierungsschaltung 45 verbunden, die ebenfalls von der Differenzauswahlsteuerung 43 gesteuert wird, und deren Ausgang mit dem Eingang einer Schwellwertlogik 46 verbunden ist. Die Ziffern an den Datenleitungen geben die Breite des Datenbusses in Bits an.

Die Extremwertsteuerung 32 und die Differenzauswahlsteuerung 43 sind einfache Gatterschaltungen, deren Aufbau vom Typ der Vergleicher abhängig ist. Jeweils ein Ausführungsbeispiel der Steuerungen wird später erläutert. Zunächst wird die Funktion des zweidimensionalen DPCM-Codierers mit Quantisierungssteuerung erläutert.

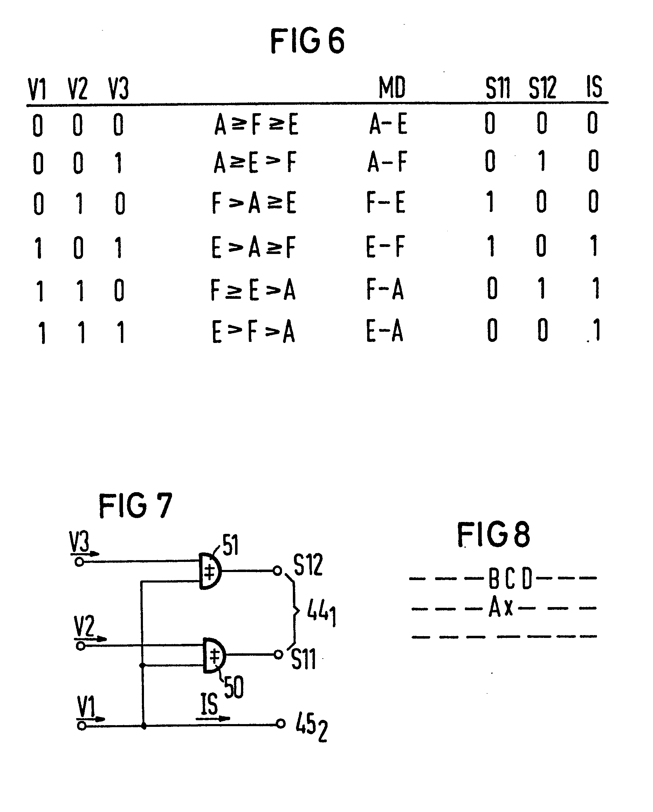

In diesem Ausführungsbeispiel soll eine zweidimensionale DPCM-Codierung z.B. nur für das Luminanzsignal erfolgen. Die digitalisierten Bildpunktsignale x (z.B. Luminanzsignale) werden dem ersten Register 1 zugeführt. Im DPCM-Codierer wird der Schätzwert $\hat{x} = \alpha A + \beta B + \gamma C + \delta D$ errechnet, wobei A der errechnete Bildpunktsignalwert des dem Bildpunktsignal x horizontal links benachbarten Bildpunktes ist, B der darüberliegende, C der Bildpunktsignalwert des über dem zum codierenden Bildpunktsignal x ist und D der Bildpunktsignalwert rechts von C ist (Fig. 8).

Damit der Empfänger dieselbe Vorhersage machen kann wie der Sender, das heisst, damit das ursprüngliche Bildpunktsignal x errechnt werden kann, darf der Codierer jedoch nicht mit den ursprünglichen Bildpunktsignalen rechnen. Zur Berechnung des Schätzwertes $\hat{x}$ werden daher die am lokalen Ausgang, dieser entspricht dem Ausgang des Registers 9, auftretenden Bildpunktsignalwerte verwendet. Als Bildpunktsignalwerte A, B, C und D werden also stets die am lokalen Ausgang abgegebenen, durch den DPCM-Codierer ermittelten Signalwerte verstanden. Durch den Horizontalcodierer wird der Vorhersagewert $\alpha A$ errechnet, für den vertikalen Anteil der Vorhersage durchlaufen die Bildsignalwerte des lokalen Ausgangs die weiteren Register 13, in denen sie verzögert werden, und den Vertikalcodierer 14, in dem der vertikale Anteil y der Vorhersage durch Multiplikation der Bildsignalwerte mit konstanten Faktoren ermittelt werden. In dem zweiten Addierer 11 wird der horizontale Vorhersagewert $\alpha \cdot A$ und der vertikale Vorhersagewert $y = \beta B + \gamma C + \delta D$ zueinander addiert und das Ergebnis dieser Addition, der Schätzwert $\hat{x}$, dem Subtrahierer 2 zur Berechnung des DPCM-Wertes $\Delta x$ zugeführt. Durch die Register im DPCM-Codierer wird erreicht, dass die zu verarbeitenden Werte an den Addierern, Subtrahierern und Multiplizierern zeitgerecht anliegen. Diese Register entsprechen getakteten Speichern. Durch die Begrenzerlogiker wird die Bitbreite der zu verarbeitenden Daten festgelegt. Der errechnete DPCM-Wert $\Delta x$ wird am Ausgang $6_2$ des Registers 6 abgegeben und im allgemeinen über einen nicht dargestellten Codierer ausgesendet.

Der Quantisierersteuerung 5 werden sämtliche zur Berechnung des Vorhersagewertes $\hat{x}$ verwendeten Bildpunktsignalwerte A, B, C und D zugeführt.

Über den Eingang $15_1$ des Registers 15 werden die Bildpunktsignalwerte B, C, D in den Registern 17, 16 und 15 (Fig. 2) gespeichert. Die Bildpunktsignalwerte werden jeweils in den Multiplizierern 18 bis 20 im allgemeinen mit unterschiedlichen Faktoren multipliziert und über die Addierer 24 und 25 zusammengefasst. Die Begrenzerlogik 27 reduziert die Datenwortbreite.

Die in Fig. 3 dargestellte Quantisierersteuerung vergleicht alle Bildpunktsignalwerte miteinander, ermittelt den Betrag der grössesten Differenz und steuert in Abhängigkeit von dieser Differenz den Quantisierer 4. Die Ermittlung der maximalen Differenz erfolgt in zwei Schritten. Zunächst werden aus den Bildpunktsignalwerten BCD der letzten Fernsehzeile die beiden Extremwerte E, F, z.B. B und D, ermittelt. Hierfür werden die Vergleicher 29 bis 31, die Extremwertsteuerung 32 und die Umschalter 33 und 34 benötigt. Die Extremwerte E, F werden dann von dem letzten Bildpunktsignalwert A subtrahiert; ausserdem wird die Differenz zwischen beiden Extremwerten E und F gebildet. Aus den Vorzeichen bits V1, V2 und V3 dieser Differenzen wird die maximale Differenz MD ermittelt. Über die einfache Schwellwertlogik 46 wird die maximale Differenz ausgewertet und der Quantisierer 4 entsprechend gesteuert.

Die Arbeitsweise der Quantisierersteuerung wird nun detailliert beschrieben:

An den Ausgängen der Register 15, 16 und 17 liegen die Bildpunktsignalwerte B, C und D an. Der erste Vergleicher 29 vergleicht die Bildsignalwerte D und C miteinander, der zweite Vergleicher 30 vergleicht die Bildpunktsignalwerte B und D miteinander und der dritte Vergleicher 31 vergleicht die Bildpunktsignalwerte B und C miteinander.

Ist der Wert an dem $C_1$-Eingang grösser als der Wert an dem $C_2$-Eingang eines Vergleichers oder gleich gross, so gibt er an seinem Ausgang die logische Null ab. Nur wenn der Wert am Eingang $C_1$ kleiner als der Wert am Eingangs $C_2$ ist, liegt an dem Ausgang die logische Eins an.

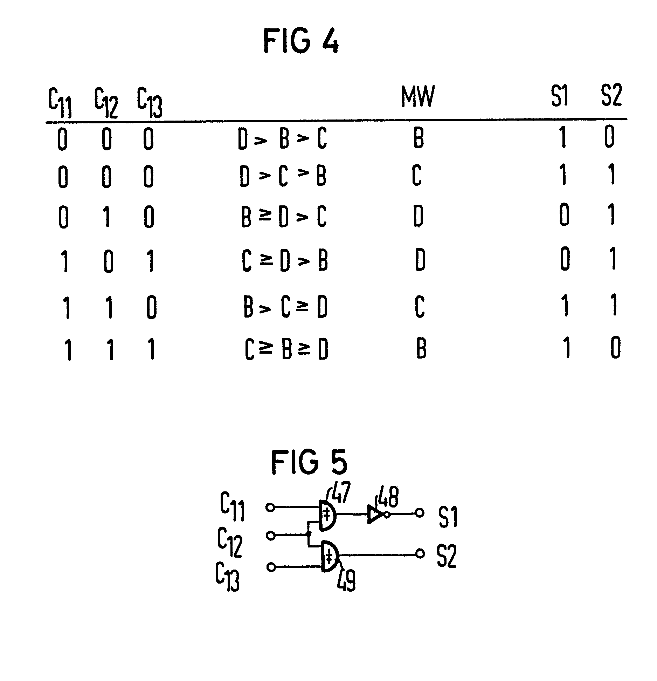

Alle möglichen Fälle sind in der Tabelle Fig. 4 dargestellt, wobei die erste Spalte jeweils die Ausgangssignale der Vergleicher 20 bis 31 an den Ausgängen $C_{11}$, $C_{12}$ und $C_{13}$ darstellen.

Durch die Extremwertsteuerung 32 müssen nur die jeweils ermittelten Extremwerte B, C oder D durchgeschaltet werden, die am Ausgang der Umschalter 33, 34 mit E und F bezeichnet sind. Der mittlere Wert, in der Tabelle Fig. 4 mit MW bezeichnet, wird nicht mehr benötigt. Eine Null als Ausgangssignal S1 oder S2 der Extremwertsteuerung bewirkt, dass der auf der Seite des Steuereingangs gelegene Eingang eines Umschalters 33, 34 durchgeschaltet wird.

Die Extremwertsteuerung für drei Bildpunktsignalwerte ist in Fig. 5 dargestellt. Sie enthält zwei Exclusiv-ODER-Gatter 47 und 49, von denen zwei Eingänge zusammengeschaltet sind und mit dem Ausgang $C_{12}$ des Vergleichers 30 verbunden sind. Der zweite Eingang des Exclusiv-ODER-Gatters 47 ist mit dem Ausgang $C_{11}$ verbunden, der zweite Eingang des Exclusiv-ODER-Gatters 49 mit dem Ausgang $C_{13}$ des Vergleichers 31. Dem Ausgang des Exclusiv-ODER-Gatters 47 ist ausserdem ein Inverter 48 nachgeschaltet, an dessen Ausgang das Steuersignal S1 abgegeben wird. Entsprechend wird das Steuersignal S2 von dem Exclusiv-ODER-Gatter 49 geliefert.

Je nach verwendetem Vergleichertyp wird die Steuerlogik unterschiedlich ausfallen, ihre Realisierung bereitet jedoch anhand einer der Fig. 4 entsprechenden Tabelle keine Probleme.

Entsprechend Fig. 3 werden die Extremwerte E und F bei diesem Ausführungsbeispiel zur Verarbeitung mit einer schnelleren Schaltkreistechnik, z.B. der FCL-Technik, über Umsetzerschaltungen 35, 36 geführt. Der Extremwert E wird hierbei invertiert, während der andere Extremwert F sowohl invertiert als auch nichtinvertiert nach der Umsetzung vorliegt.

Über die Register 37, 38 und 39 werden die Extremwerte zwischengespeichert, damit sie gleichzeitig mit dem Bildpunktsignalwert A zur Verfügung stehen.

Mit Hilfe der Addierer 40, 41 und 42 werden die Differenzen A-E, A-F und F-E gebildet. Hierbei sind zahlreiche Varianten möglich. Statt einer Invertierung der Extremwerte vor der Addition können natürlich mathematisch korrekt die Zweierkomplemente gebildet werden. Wird dies versäumt, so kann der Fehler durch Hinzufügen des Wertes 1 mit Hilfe des Übertragungseinganges der Addierer korrigiert werden. Dieser Fehler kann auch ignoriert werden, da alle Differenzen denselben Fehler aufweisen. In diesem Beispiel wird angenommen, dass die Bildung der Differenzen korrekt erfogt. Während die Differenzen dem Multiplexer 44 zugeführt werden, werden die Vorzeichen von der Differenzauswahlsteuerung 43 ausgewertet.

In Fig. 6 ist hierzu die entsprechende Tabelle angegeben. Dieser Tabelle entsprechend wird die maximale Differenz MD zu der Invertierungsschaltung 45 durchgeschaltet. Ist die Differenz negativ, so wird über die Differenzauswahlsteuerung eine Komplementbildung durch die Invertierungsschaltung bewirkt. Hierdurch wird der Schwellwertlogik 46 stets der Betrag der maximalen Differenz MD zugeführt. Wird auf die Betragsbildung verzichtet, so muss die Schwellwertlogik entsprechend angepasst werden. Es ist ausreichend, dass von der Schwellwertlogik z.B. die drei höchstwertigen Bits ausgewertet werden. Von der Schwellwertlogik wird ein zwei Bits breites Steuersignal S11, S12 abgegeben, durch das vier verschiedene Quantisierungskennlinien eingestellt werden können.

Die Differenzauswahlsteuerung 43 (Fig. 7) ist als einfache Gatterschaltung ausgeführt, die zwei Exclusiv-ODER-Gatter 50 und 51 enthält, deren erste Eingänge zusammengeschaltet und mit dem Vorzeichenausgang des Addierers 40 verbunden sind. Der zweite Eingang des Exclusiv-ODER-Gatters 50 ist mit dem Vorzeichenausgang des Addierers 41 verbunden und der zweite Eingang des Exclusiv-ODER-Gatters 51 ist mit dem Vorzeichenausgang des Addierers 42 verbunden. Der Vorzeichenausgang des Addierers 40 wird der Invertierungsschaltung 45 direkt zugeführt, die beiden Steuerbits S11, S12 an den Ausgängen der Exclusiv-ODER-Gatter 50, 51 steuern den Multiplexer 44.

Für die Erfindung unwesentliche Details, z.B. eine Steuerung, die dafür sorgt, dass keine vertikale Vorhersage bei der ersten Zeile jedes Halbbildes getroffen wird, wurden der Übersichtlichkeit halber fortgelassen.

## Patentanprüche

1. Anordnung zur zweidimensionalen DPCM-Codierung mit einem umschaltbaren Quantisierer (4) und mit einer Quantisierersteuerung, der jeweils der zuletzt errechnete Bildpunktsignalwert (A) und die benachbarten Bildpunktsignalwerte (B, C, D) der vorangegangenen Fernsehzeile zugeführt sind, dadurch gekennzeichnet, dass mehrere in Reihe geschaltete Register (15, 16, 17) vorgesehen sind, die die dem verarbeitenden Bildpunktsignal (x) benachbarten Bildpunktsignalwerte (B, C, D) der vorangegangenen Fernsehzeile speichern, dass die Quantisierersteuerung (5) eine Vergleichseinrichtung (COM) enthält, die einen Amplitudenvergleich zwischen den Bildpunktsignalwerten (B, C, D) der vorangegangenen Fernsehzeile durchführt, dass eine Auswahlsteuerung (32) an die Ausgänge ($C_{11}$, $C_{12}$, $C_{13}$) der Vergleichseinrichtung angeschlossen ist, dass eine Extremwertsteuerung (32) vorgesehen ist, die von den Bildpunktsignalwerten (B, C, D) zwei Extremwerte (E, F) über eine Multiplexeinrichtung (MUX) an eine Subtraktionseinrichtung (SUB) durchschaltet, der ebenfalls der zuletzt errechnete Bildpunktsignalwert (A) zugeführt ist und in der die Differenzen zwischen dem zuletzt errechneten Bildpunktsignalwert (A) und den Extremwerten (E, F) sowie zwischen den Extremwerten (F-E) gebildet werden, dass eine Differenzauswahlsteuerung (43) vorgesehen ist, der die Vorzeichenbits (V1, V2, V3) der Differenzen (A-F, A-E, F-E) zugeführt werden, und dass ein Multiplexer (44) an die Ausgänge der Subtraktionseinrichtung (SUB) angeschlossen ist, über den die Differenzauswahlsteuerung (43) die betragsmässig grösste Differenz (MD) an eine Schwellwertlogik (46) durchschaltet, die den Quantisierer (4) steuert.

2. Anordnung nach Anspruch 1, dadurch gekennzeichnet, dass eine Invertierungsschaltung (45) zwischen dem Ausgang des Multiplexers (44) und der Schwellwertlogik (46) eingeschaltet ist, die bei einem negativen Vorzeichen der grössten Differenz ($\overline{MD}$) durch Bildung des Zweierkomplements den Betrag der maximalen Differenz (MD) an die Schwellwertlogik (46) abgibt.

3. Anordnung nach Anspruch 1 oder Anspruch 2, dadurch gekennzeichnet, dass drei Bildpunktsignalwerte (B, C, D) der vorangegangenen Fernsehzeile zur Berechnung eines vertikalen Vorhersagewertes (y) vorgesehen sind, dass drei Vergleicher (29, 30, 31) mit je zwei Eingängen ($C_1$, $C_2$) vorgesehen sind und dass als Multiplexeinrichtung (MUX) zwei elektronische Umschalter (33, 34) vorgesehen sind.

4. Anordnung nach Anspruch 3, dadurch gekennzeichnet, dass als Extremwertsteuerung (32) zwei Exclusive-ODER-Gatter (47, 49) vorgesehen sind, deren erste Eingänge zusammengeschaltet und mit dem Ausgang ($C_{12}$) des zweiten Komparators (30) verbunden sind und dass jeweils der zweite Eingang der Exclusive-ODER-Gatter (47, 49) mit dem Ausgang ($C_{11}$) des ersten Komparators (29) bzw. mit dem Ausgang ($C_{13}$) des dritten Komparators (31) verbunden ist.

5. Anordnung nach einem der vorhergehenden Ansprüche, dadurch gekennzeichnet, dass die Subtraktionseinrichtung (SUB) drei Addierer (40, 41, 42) enthält, denen jeweils das Zweierkomplement des zu subtrahierenden Extremwertes (E, F) und der zuletzt errechnete Bildpunktsignalwert (A) zugeführt werden.

6. Anordnung nach Anspruch 5, dadurch gekennzeichnet, dass statt des Zweierkomplements die invertierten Extremwerte (E, F) der Subtraktionseinrichtung (SUB) zugeführt werden.

7. Anordnung nach einem der Ansprüche 5 oder 6, dadurch gekennzeichnet, dass als Differenzauswahlsteuerung (43) zwei Exclusive-ODER-Gatter (50, 51) vorgesehen sind, deren erste Eingänge zusammengeschaltet und an den Vorzeichenausgang des ersten Addierers (40) angeschlossen sind und dass die zweiten Eingänge der Exclusive-ODER-Gatter (50, 51) jeweils an einen Vorzeichenausgang des zweiten bzw. dritten Addierers (41, 42) angeschlossen sind.

8. Anordung nach Anspruch 1 oder Anspruch 2, dadurch gekennzeichnet, dass nur die drei höchstwertigsten Bits des Betrages der maximalen Differenz (MD) dem Eingang des Schwellwertlogik (46) zugeführt sind.

9. Anordung nach einem der vorhergehenden Ansprüche, dadurch gekennzeichnet, dass die Anordnung in integrierter Schaltungstechnik aufgebaut ist.

10. Anordnung nach einem der vorhergehenden Ansprüche, dadurch gekennzeichnet, dass eine entsprechend aufgebaute Decodiereranordnung vorgesehen ist.

## Claims

1. An arrangement for two-dimensional DPCM-coding comprising a reversible quantiser (4) and a quantiser control unit, which is in each case supplied with the last calculated picture point signal value (A) and the adjacent picture point signal values (B, C, D) of the preceding television line, characterised in that a plurality of series connected registers (15, 16, 17) are provided which store the picture point signal values (B, C, D) of the preceding television line, adjacent to the picture point signal (x) which is to be processed, that the quantiser control unit (5) includes a comparator device (COM) which carries out an amplitude comparison between the picture point signal values (B, C, D) of the preceding television line, that a selection control unit (32) is connected to the outputs ($C_{11}$, $C_{12}$, $C_{13}$) of the comparator device, that an extreme value control unit (32) is provided which, of the picture point signal values (B, C, D), switches through two extreme values (E, F) via a multiplexing device (MUX) to a subtraction device (SUB) which is likewise supplied with the last calculated picture point signal value (A) and in which the differences are formed between the last calculated picture point signal value (A) and the extreme values (E, F) and between the extreme values (F-E) that a difference selection control unit (43) is provided which is supplied with the sign bits (V1, V2, V3) of the differences (A-F, A-E, F-E), and that a multiplexer (44) is connected to the outputs of the subtraction device (SUB), via which multiplexer the difference selection control unit (40) switches through the difference which is greatest in quantity (MD) to a threshold value logic unit (46) which controls the quantiser (4).

2. An arrangement as claimed in claim 1, characterised in that an inverter circuit (45) is connected between the output of the multiplexer (44) and the threshold value logic unit (46) and, in the case of a negative sign of the greatest difference ($\overline{MD}$), by forming the two's complement emits the amount of the maximum difference (MD) to the threshold value logic unit (46).

3. An arrangement as claimed in claim 1 or 2, characterised in that three picture point signal values (B, C, D) of the preceding television line are provided to calculate a vertical prediction value (y), that three comparators (29, 30, 31) are provided, each having two inputs ($C_1$, $C_2$), and that two electronic changeover switches (33, 34) are provided as multiplexing device (MUX).

4. An arrangement as claimed in claim 3, characterised in that the extreme value control unit (32) comprises two EXCLUSIVE-OR gates (47, 49), the first inputs of which are interconnected and are connected to the output ($C_{12}$) of the second comparator (30), and that the second inputs of each of the EXCLUSIVE-OR gates (47, 49) are connected to the output ($C_{11}$) of the first comparator (29) and to the output ($C_{13}$) of the third comparator (31) respectively.

5. An arrangement as claimed in one of the preceding claims, characterised in that the subtraction device (SUB) includes three adders (40, 41, 42), each of which is supplied with the two's complement of the extreme value (E, F) which is to be subtracted and with the last calculated picture point signal value (A).

6. An arrangement as claimed in claim 5, characterised in that instead of the two's complement, the inverted extreme values (E, F) are supplied to the subtraction device (SUB).

7. An arrangement as claimed in one of the claims 5 or 6, characterised in that the difference selection control unit (43) comprises two EXCLUSIVE-OR gates (50, 51), the first inputs of which are interconnected and are connected to the sign output of the first adder (40), and that the second inputs of the EXCLUSIVE-OR gates (50, 51) are each connected to a sign output of the second and third adders (41, 42) respectively.

8. An arrangement as claimed in claim 1 or 2 characterised in that only the three highest-value bits of the amount of the maximum difference (MD) are supplied to the input of the threshold value logic unit (46).

9. An arrangement as claimed in one of the preceding claims, characterised in that the arrangement is contructed in integrated circuitry technology.

10. An arrangement as claimed in one of the preceding claims, characterised in that a correspondingly constructed decoder arrangement is provided.

## Revendications

1. Dispositif pour réaliser le codage bidimensionnel (MDIC) par modulation différentielle impulsioncode comportant un quantificateur commutable (4) et un dispositif de commande du quantificateur, auquel sont envoyées respectivement la valeur (A), calculée en dernier lieu, du signal d'un point d'image et les valeurs voisines (B, C, D) des signaux de points d'image de la ligne de télévision précédente, caractérisé par le fait qu'il est prévu plusieurs registres (15, 16, 17) branchés en série, qui mémorisent les valeurs (B, C, D), voisines du signal traité de point d'image (x), de signaux de points d'image de la ligne de télévision précédente, que le dispositif (5) de commande du quantificateur contient un dispositif comparateur (COM), qui exécute une comparation d'amplitude entre les valeurs (B, C, D) des signaux de points d'images de la ligne de télévision précédente, qu'un dispositif de commande de sélection (32) est raccordé aux sorties ($C_{11}$, $C_{12}$, $C_{13}$) du dispositif comparateur, qu'il est prévu un dispositif (32) de commande de valeurs extrêmes, qui transmet, à partir des valeurs (B, C, D) de signaux de points d'image, deux valeurs extrêmes (E, F) par l'intermédiaire d'un dispositif de multiplexage (MUX) à un dispositif soustracteur (SUB), auquel est également envoyée la valeur (A), calculée en dernier lieu, du signal de point d'image et dans lequel les différences entre la valeur (A), calculée en dernier lieu, du signal de point d'image et les valeurs extrêmes (E, F) et entre les valeurs extrêmes (F-E) sont formées, qu'il est prévu un dispositif (43) de commande de sélection de différences, auquel sont envoyés les bits de signe (V1, V2, V3) des différences (A-F, A-E, F-E), et qu'un multiplexeur (44) est raccordé aux sorties du dispositif soustracteur (SUB), à l'aide duquel le dispositif (43) de commande de sélection de différences transmet la différence (MD) de valeur maximale à un circuit logique à valeur de seuil (46), qui commande le quantificateur (4).

2. Dispositif suivant la revendication 1, caractérisé par le fait qu'entre la sortie du multiplexeur (44) et le circuit logique à valeur de seuil (46) se trouve branché un circuit inverseuer (45) qui, dans le cas où la différence maximale ($\overline{MD}$) possède un signe négatif, envoie au circuit logique à valeur de seuil (46) la valeur de la différence maximale (MD), par formation du complément à deux.

3. Dispositif suivant la revendication 1 ou 2, caractérisé par le fait que trois valeurs (B, C, D) de signaux de points d'image de la ligne de télévision précédente sont prévues pour le calcul d'une valeur prévisionnelle verticale (y), et qu'il est prévu trois comparateurs (29, 30, 31) comportant chacun des entrées ($C_1$, $C_2$) et qu'il est prévu deux commutateurs électroniques (34, 35) en tant que dispositif de multiplexage (MUX).

4. Dispositif suivant la revendications 3, caractérisé par le fait qu'il est prévu comme dispositif (32) de commande des valeurs extrêmes, deux portes OU-Exclusif (47, 49), dont les premières entrées sont interconnectées et sont reliées à la sortie ($C_{12}$) du second comparateur (30), et que respectivement la seconde entrée de la porte OU-Exclusif (47, 49) est reliée à la sortie ($C_{11}$) du premier comparateur (29) ou à la sortie ($C_{13}$) du troisième comparateur (31).

5. Dispositif suivant l'une des revendications précédentes, caractérisé par le fait que le dispositif soustracteur (SUB) contient trois additionneurs (40, 41, 42), auxquels sont envoyés respectivement le complément à deux de la valeur extrême (E, F) devant être soustraite, et la valeur (A), calculée en dernier lieu, du signal de point d'image.

6. Dispositif suivant la revendication 5, caractérisé par le fait qu'au lieu du complément à deux, ce sont les inverses des valeurs extrêmes (E, F) qui sont envoyés au dispositif soustracteur (SUB).

7. Dispositif suivant l'une des revendications 5 ou 6, caractérisé par le fait qu'il est prévu, comme dispositif (43) de commande de sélection de différences, deux portes OU-Exclusif (50, 51), dont les premières entrées sont interconnectées et sont raccordées à la sortie du signe du premier additionneur (40), et que les secondes entrées des portes OU-Exclusif (50, 51) sont raccordées respectivement à une sortie du signe du second et du troisième additionneur (41, 42).

8. Dispositif suivant la revendication 1 ou 2, caractérisé par le fait que seuls les bits de poids les plus élevés de la valeur de la différence maximale (MD) sont envoyés à l'entrée du circuit logique à valeur de seuil (46).

9. Dispositif suivant l'une des revendications précédentes, caractérisé par le fait que le dispositif est réalisé selon la technique des circuits intégrés.

10. Dispositif suivant l'une des revendications précedentes, caractérisé par le fait qu'il est prévu un dispositif de codage constitué de façon correspondante.

# FIG 1

# FIG 2

# FIG 3

# FIG 4

| $C_{11}$ | $C_{12}$ | $C_{13}$ | | MW | S1 | S2 |
|---|---|---|---|---|---|---|
| 0 | 0 | 0 | $D > B > C$ | B | 1 | 0 |
| 0 | 0 | 0 | $D > C > B$ | C | 1 | 1 |
| 0 | 1 | 0 | $B \geqq D > C$ | D | 0 | 1 |
| 1 | 0 | 1 | $C \geqq D > B$ | D | 0 | 1 |
| 1 | 1 | 0 | $B > C \geqq D$ | C | 1 | 1 |
| 1 | 1 | 1 | $C \geqq B \geqq D$ | B | 1 | 0 |

# FIG 5

# FIG 6

| V1 | V2 | V3 | | MD | S11 | S12 | IS |
|----|----|----|------|----|-----|-----|----|
| 0 | 0 | 0 | $A \geqq F \geqq E$ | A–E | 0 | 0 | 0 |
| 0 | 0 | 1 | $A \geqq E > F$ | A–F | 0 | 1 | 0 |
| 0 | 1 | 0 | $F > A \geqq E$ | F–E | 1 | 0 | 0 |
| 1 | 0 | 1 | $E > A \geqq F$ | E–F | 1 | 0 | 1 |
| 1 | 1 | 0 | $F \geqq E > A$ | F–A | 0 | 1 | 1 |
| 1 | 1 | 1 | $E > F > A$ | E–A | 0 | 0 | .1 |

# FIG 7

# FIG 8